# EUROPEAN PATENT SPECIFICATION

(11) **EP 4 211 077 B1**
(45) Date of publication and mention of the grant of the patent: **09.07.2025**
(21) Application number: 21712192.0
(22) Date of filing: 19.03.2021
(51) Int. Cl.: C01B 25/00, H01M 4/58, H01M 4/62, H01M 10/0525

(54) **SYNTHESIS OF NANOSTRUCTURED LITHIUM ZIRCONIUM PHOSPHATE**
SYNTHESE VON NANOSTRUKTURIERTEM LITHIUMZIRKONIUMPHOSPHAT
SYNTHÈSE DE PHOSPHATE DE LITHIUM-ZIRCONIUM NANOSTRUCTURÉ

(30) Priority: 07.09.2020 EP 20194824
(43) Date of publication of application: 19.07.2023
(73) Proprietor: Evonik Operations GmbH, 45128 Essen (DE)
(72) Inventor: TAKATA, Ryo, 63452 Hanau (DE); WIEGAND, Armin, 63538 Großkrotzenburg (DE); ALFF, Harald, 63796 Kahl (DE); SCHMIDT, Franz, 64521 Groß-Gerau (DE); ESKEN, Daniel, 63526 Erlensee (DE); HERZOG, Marcel, 63791 Karlstein (DE)
(74) Representative: Evonik Patent Association
(86) International application number: PCT/EP2021/057136
(87) International publication number: WO 2021/089886

(56) References cited:
- US-A1- 2006 229 197
- US-A1- 2014 084 503
- DATABASE WPI Week 201969, Derwent World Patents Index; AN 2019-54742Y, XP002802958
- HUI XIE ET AL: "LiZrCa(PO), a room-temperature Li-ion solid electrolyte", JOURNAL OF POWER SOURCES, ELSEVIER SA, CH, vol. 196, no. 18, 6 May 2011 (2011-05-06), pages 7760 - 7762, XP028378312, ISSN: 0378-7753, [retrieved on 20110517], DOI: 10.1016/J.JPOWSOUR.2011.05.002

## Description

### Field of the invention

The invention relates to a process for producing lithium zirconium phosphate by means of flame spray pyrolysis, lithium zirconium phosphate obtainable by this process and the use thereof in lithium ion batteries.

### Prior art

Secondary lithium ion batteries are one of the most important battery types currently used. The secondary lithium ion batteries are usually composed of an anode made of a carbon material or a lithium-metal alloy, a cathode made of a lithium-metal oxide, an electrolyte in which a lithium salt is dissolved in an organic solvent and a separator providing the passage of lithium ions between the positive and the negative electrode during the charging and the discharging processes.

In endeavour to develop secondary batteries with improved intrinsic safety and energy density, the use of solid instead of liquid electrolytes has considerably progressed in the recent time. Among such systems, secondary lithium batteries with electrodes made of lithium metal or lithium metal alloys are believed to provide high energy density and be particularly suitable. Such all-solid-state secondary lithium ion batteries should have good ion conductivity at an interface between an electrode active material and an electrolyte in order to have the required load characteristics. This high ion conductivity can be achieved by coating the surface of an active electrode material with some lithium-comprising compounds, such as LiTi₂(PO₄)₃, as described in JP 4982866 B2.

H. Xiea, et al., describe in Journal of Power Sources 2011, vol. 196, pp. 7760- 7762, preparation of Li_{1.2}Zr_{1.9}Ca_{0.1}(PO₄)₃ by a solid-state reaction of ZrO₂ with Li₂CO₃, NH₄H₂PO₄, and CaCO₃. Li-ion conductivity of this lithium zirconium phosphate was found to be comparable to that of Li_{1.3}Ti_{1.7}Al_{0.3}(PO₄)₃ used as a solid Li-ion separator in test cells of Li-ion batteries.

Thus, lithium zirconium phosphates are promising candidates for Li-ion conductive materials used in lithium ion batteries, particularly in all-solid-state batteries.

Y. Li, et al., describe in PNAS, 2016, vol. 113 (47), pp. 13313-13317, preparation of a rhombohedral LiZr₂(PO₄)₃ by solid-state reaction of (NH₄)₂HPO₄ with Li₂CO₃ and zirconium acetate and its use as a solid electrolyte of an all-solid state Li/LiFePO₄ lithium ion battery. I. Hanghofer, et al., describe in Dalton Trans., 2019, vol. 48, pp. 9376-9387, preparation of a rhombohedral Ca-stabilized Li_{1.4}Ca_{0.2}Zr_{1.8}(PO₄)₃ by a solid-state reaction of Li₂CO₃, (NH₄)₂HPO₄ and CaCO₃ with either ZrO₂ or zirconium acetate suitable as a solid electrolyte for use in all-solid-state lithium ion batteries.

CN 109 888 208 A discloses a lithium zirconium phosphate of a general formula Lia Zrb Mc (PO4)d (i.e. LiMZrPO4, M = Ti, La, Zr, Sr, Al, Y, Co, Mn).

US 2014/084503 discloses methods for making lithium metal phosphates (e.g. (Li1.4Al0.4M1.6(PO4)3 with M : Ti or Ge) by flame spray pyrolysis, wherein organic phosphates, such as trimethyl phosphate (TMP) and triethyl phosphate (TEP) are used as precursor.

Both documents show stoichiometries different from the materials of the present invention.

Lithium zirconium phosphates prepared by solid state syntheses usually have relatively high material densities and low BET surface areas, which is well suitable for using such materials e.g. as a core material of a solid-state electrolyte of a lithium ion battery. However, if such compounds are supposed to be used as additives, which can be well distributed in the core material or on its surface, smaller particle size, lower material density and higher BET surface area thereof are of crucial importance.

### Problem and solution

The problem addressed by the present invention is that of providing an improved method for industrial manufacturing of crystalline lithium zirconium phosphates usable in lithium ion batteries, especially as coating or doping material for electrodes of lithium ion batteries, particularly anodes, and as additives to electrolytes of lithium ion batteries. Specifically, this method should provide lithium zirconium phosphate particles with relatively small particle size, high BET surface area and low tamped density.

Spray pyrolysis is a known method for producing various metal oxides and particular metal salts.

In spray pyrolysis, metal compounds in the form of fine droplets are introduced into a high-temperature zone where they are oxidized and/or hydrolysed to give the corresponding metal oxides or salts. A special form of this process is that of flame spray pyrolysis, in which the droplets are supplied to a flame which is formed by ignition of a fuel gas and an oxygen-containing gas.

US 2013/0316233 A1 generally discloses a method for producing a particulate mixture suitable for using as an active cathode material for lithium ion batteries, comprising supplying an aerosol formed from solutions containing a lithium source, a transition metal source and a phosphorus source into a flame together with a combustion-supporting gas and a flammable gas. Transition metal can be selected from Fe, Mn, Ti, Cr, V, Ni, Co, Cu, Zn, Al, Ge, Zr, Mo, W; phosphorus source can be selected from phosphoric acids, ammonium phosphates, sodium phosphate and ferrous phosphate. Specific examples of this patent application only show preparation of lithium iron phosphates. Synthesis of lithium zirconium phosphate is not disclosed in US 2013/0316233 A1. A successful synthesis of this compound based on the general disclosure of US 2013/0316233 A1 would require a laborious selection of an appropriate lithium source, metal source, phosphorus source, solvent and process conditions. Even doing so, it is not clear whether lithium zirconium phosphate with a high BET surface area and low material density would be obtainable by this method at all.

In the course of thorough experimentation, it was surprisingly found that lithium zirconium mixed phosphates with the desired particle properties can indeed be directly prepared by means of the flame spray pyrolysis method. However, using a special combination of metal and phosphorus precursors and the solvents in the inventive process turned out to be of crucial importance for obtaining particles with desired properties according to the invention.

### Lithium zirconium phosphate

The invention provides lithium zirconium phosphate of a general formula LiₐZr_{b}M_{c}(PO₄)_{d}, wherein M is at least one metal different from Li and Zr,
0.5 ≤ a ≤ 5.0, 0.5 ≤ b ≤ 5.0, 0 ≤ c ≤ 5, 1 ≤ d ≤ 5 characterized in that the lithium zirconium phosphate
- is in the form of aggregated primary particles,
- has a BET surface area of 5 m²/g -100 m²/g,
- a numerical mean particle diameter of d₅₀ = 0.03 µm -2 µm, as determined by static light scattering (SLS), and
- a tamped density of 20 g/L -200 g/L.

The inventive lithium zirconium phosphate can be obtained by the process of the invention described below.

In the general formula LiₐZr_{b}M_{c}(PO₄)_{d} of the inventive lithium zirconium phosphate, M can be one or several elements selected from the group consisting of Na, K, Be, Mg, Ca, Sr, Ba, Zn, Co, Ni, Cu, Mn, B, Al, Ga, In, Fe, Sc, Y, La, Ti, Zr, Hf, Ce, Si, Ge, Sn, Pb, V, Nb, Ta, Mo, W. Preferably, M = Ca.

The composition of the inventive lithium zirconium phosphate preferably corresponds to the formula Li_{0.8-1.5}Zr_{1.5-2.5}M_{0-0.5}(PO₄)_{2.5-3.5}, more preferably Li_{1.0-1.3}Zr_{1.8-2.2}M_{0-0.3}(PO₄)_{2.8-3.2}.

The inventive lithium zirconium phosphate has a BET surface area of 5 m²/g -100 m²/g, preferably of 7 m²/g - 80 m²/g, more preferably of 15-60 m²/g.

The BET surface area can be determined according to DIN 9277:2014 by nitrogen adsorption according to Brunauer-Emmett-Teller procedure.

The inventive lithium zirconium phosphate is in the form of aggregated primary particles with a numerical mean diameter of primary particles of typically 1 - 100 nm, preferably 3 - 70 nm, more preferably 5 - 50 nm, as determined by transition electron microscopy (TEM). This numerical mean diameter can be determined by calculating the average size of at least 500 particles analysed by TEM.

The numerical mean particle diameter of the lithium zirconium phosphate in aggregated and optionally agglomerated form d₅₀ is about 0.03 µm - 2 µm, more preferably 0.04 µm - 1 µm, even more preferably 0.05 µm - 0.5 µm, as determined by static light scattering (SLS) after 300 s of ultrasonic treatment at 25 °C of a mixture consisting of 5 % by weight of the particles and 95 % by weight of a 0.5 g/L solution of sodium pyrophosphate in water.

The agglomerates and partly the aggregates can be destroyed e.g. by grinding or ultrasonic treatment of the particles to result in particles with a smaller particle size and a narrower particle size distribution.

The lithium zirconium phosphate according to the invention has a tamped density of 20 g/L - 200 g/L, preferably 25 g/L - 150 g/L, even more preferably 30 g/L - 100 g/L, still more preferably 40 g/L - 80 g/L.

Tamped density of a pulverulent or coarse-grain granular material can be determined according to DIN ISO 787-11:1995 "General methods of test for pigments and extenders - - Part 11: Determination of tamped volume and apparent density after tamping". This involves measuring the apparent density of a bed after agitation and tamping.

### The process for producing lithium zirconium phosphate

The invention further provides a process for producing the inventive lithium zirconium phosphate by means of flame spray pyrolysis, wherein
at least one solution of metal precursors, comprising
   - a lithium carboxylate and a zirconium carboxylate, wherein each of these metal carboxylates contains 5 to 20 carbon atoms,
   - an organic phosphate,
   - a solvent containing less than 10% by weight water
is subjected to flame spray pyrolysis.

During the inventive flame spray pyrolysis process, the solution of metal compounds (metal precursors) and a phosphorous source in the form of fine droplets is typically introduced into a flame, which is formed by ignition of a fuel gas and an oxygen-containing gas, where the used metal precursors together with the phosphorous source are oxidized and/or hydrolysed to give the corresponding lithium zirconium phosphate.

This reaction initially forms highly disperse approximately spherical primary particles, which in the further course of the reaction coalesce to form aggregates. The aggregates can then accumulate into agglomerates. In contrast to the agglomerates, which as a rule can be separated into the aggregates relatively easily by introduction of energy, the aggregates are broken down further, if at all, only by intensive introduction of energy.

The produced aggregated compound can be referred to as "fumed" or "pyrogenically produced" lithium zirconium phosphate.

The flame spray pyrolysis process is in general described in WO 2015173114 A1 and elsewhere.

The inventive flame spray pyrolysis process preferably comprises the following steps:
a) the solution of metal precursors is atomized to afford an aerosol by means of an atomizer gas,
b) the aerosol is brought to reaction in the reaction space of the reactor with a flame obtained by ignition of a mixture of fuel gas and an oxygen-containing gas to obtain a reaction stream,
c) the reaction stream is cooled and
d) the solid lithium zirconium phosphate is subsequently removed from the reaction stream.

Examples of fuel gases are hydrogen, methane, ethane, natural gas and/or carbon monoxide. It is particularly preferable to employ hydrogen. A fuel gas is employed in particular for embodiments where a high crystallinity of the lithium zirconium phosphate to be produced is desired.

The oxygen-containing gas is generally air or oxygen-enriched air. An oxygen-containing gas is employed in particular for embodiments where for example a high BET surface area of the lithium zirconium phosphate to be produced is desired. The total amount of oxygen is generally chosen such that, it is sufficient at least for complete conversion of the fuel gas and the metal precursors.

For obtaining the aerosol, the vaporized solution containing metal precursors can be mixed with an atomizer gas, such as nitrogen, air, and/or other gases. The resulting fine droplets of the aerosol preferably have an average droplet size of 1-120 µm, particularly preferably of 30-100 µm. The droplets are typically produced using single- or multi-material nozzles. To increase the solubility of the metal precursors and to attain a suitable viscosity for atomization of the solution, the solution may be heated.

Metal precursors employed in the inventive process include at least one lithium carboxylate and at least one zirconium carboxylate, each containing 5 to 20 carbon atoms.

The lithium and zirconium carboxylates used in the process according to the invention may independently of each other be a linear, branched or cyclic pentanoate (C5), hexanoate (C6), heptanoate (C7), octanoate (C8), nonanoate (C9), decanoate (D10), undecanoate (C11), dodecanoate (C12), tridecanoate (C13), tetradecanoate (C14), pentadecanoate (C15), hexadecanoate (C16), heptadecanoate (C17), octadecanoate (C18), nonadecanoate (C19), icosanoate (C20) of lithium and/or zirconium, and the mixtures thereof.

Most preferably, zirconium 2-ethylhexanoate (C8) and lithium neodecanoate (C10) are used.

The used metal precursors may contain carboxylates or other salts of other than lithium and zirconium metals.

Other than those of lithium and zirconium metal precursors may also be inorganic metal compounds, such as nitrates, carbonates, chlorides, bromides, or other organic metal compounds, such as alkoxides, e.g. ethoxides, n-propoxides, isopropoxides, n-butoxides and/or tert-butoxides.

The term "organic phosphate" in the context of the present invention relates to any compound having at least one group (R) containing at least one carbon atom bound to the phosphorus atom of the unit P(=O) via an oxygen atom, e.g. a compound of a general formula (RO)₃P(=O) or (RO)(P(=O))₂, wherein R is a group containing at least one carbon atom, e.g. methyl or ethyl.

The organic phosphate used in the inventive process is preferably selected from esters of phosphonic acid (H₃PO₃), orthophosphoric acid (H₃PO₄), metaphosphoric acid (HPO₃), pyrophosphoric acid (H₄P₂O₇), polyphosphoric acids, and mixtures thereof.

The organic phosphate can be selected from alkyl esters, such as methyl, ethyl, propyl, butyl, hexyl, aryl esters, such as phenyl, mixed alkyl/aryl esters, and mixture thereof.

The organic phosphate is preferably an ester having groups containing 1 to 10 carbon atoms, most preferably alkyl groups containing 1 to 10 carbon atoms.

The use of organic phosphates as phosphorous source surprisingly turned out to be crucial for obtaining small particles of lithium zirconium phosphate with a high BET surface area and low tamped density.

The solvent mixture used in the inventive process can be selected from the group consisting of linear or cyclic, saturated or unsaturated, aliphatic or aromatic hydrocarbons, esters of carboxylic acids, ethers, alcohols, carboxylic acids, and the mixtures thereof.

The solvent mixture used in the present invention contains less than 10 % by weight water, preferably less than 5 % by weight water, more preferably less than less than 3 % by weight water, even more preferably less than 2 % by weight water, still more preferably less than 1 % by weight water.

The low water content precludes the undesired hydrolysis of the zirconium carboxylate in metal precursor solution.

The total metal content in the solution of the metal precursors is preferably 1 % - 30 % by weight, more preferably 2 % - 20 % by weight, even more preferably 3 % - 15 % by weight. Under "total metal content" is understood the total weight proportion of all metals contained in the metal precursors in the used solution of metal precursors.

The solvent mixture used for the inventive process may additionally contain a chelating agent, i.e. a compound capable of forming two or more coordination bonds with metal ions. The examples of such chelating agents are e.g. diamines like ethylendiamine, ethylenediaminetetraacetic acid (EDTA) and 1,3-dicarbonyl compounds such as acetyl acetone and alkyl acetyl acetates. Most preferably, acetyl acetone is used as such a chelating agent.

It was observed that in the presence of such chelating agents, some metal precursors, for example zirconium compounds, show better solubility and no precipitation after a relatively long storage time.

The use of the special combination of the metal precursors, the phosphorus source and the solvent in the inventive process allows ensuring good solubility of all precursors and achieving the desired particle properties of the resulting lithium zirconium phosphate such as small particle size, high BET surface area and low tamped density.

The inventive process can further comprise a step of thermal treatment of the lithium zirconium phosphate produced by means of flame spray pyrolysis.

This further thermal treatment is preferably carried out at a temperature of 600 °C - 1300 °C, more preferably at 650 °C - 1250 °C, even more preferably at 700 °C - 1200 °C, still more preferably at 750 °C - 1150 °C.

The thermal treatment according to the inventive process allows obtaining a thermally treated lithium zirconium phosphate with desirable properties, especially the desired crystalline structure.

The inventive process can comprise a further step of milling, preferably ball milling of the thermally treated lithium zirconium phosphate.

The ball milling is preferably carried out by ZrO₂ balls, e.g. with a diameter of about 0.5 mm in an appropriate solvent, such as ethanol or isopropanol.

### Use of the lithium zirconium phosphate in lithium ion batteries

The invention further provides the use of the lithium zirconium phosphate according to the invention in lithium ion batteries, particularly as a component of a solid-state electrolyte of a lithium ion battery, as an additive in liquid, or gel electrolyte or as a constituent of an electrode of a lithium ion battery.

The invention further provides lithium ion battery comprising the lithium zirconium phosphate according to the invention or the lithium zirconium phosphate obtainable by the inventive process.

The lithium ion battery of the invention can contain an active positive electrode (cathode), an anode, a separator and an electrolyte containing a compound comprising lithium.

The positive electrode (cathode) of the lithium ion battery usually includes a current collector and an active cathode material layer formed on the current collector.

The current collector may be an aluminium foil, copper foil, a nickel foil, a stainless-steel foil, a titanium foil, a polymer substrate coated with a conductive metal, or a combination thereof.

The active positive electrode materials may include materials capable of reversible intercalating/deintercalating lithium ions and are well known in the art. Such active positive electrode materials may include transition metal oxides, such as mixed oxides comprising Ni, Co, Mn, V or other transition metals and optionally lithium. The mixed lithium transition metal oxides used with preference as active positive electrode materials are selected from the group consisting of lithium-cobalt oxide, lithium-manganese oxide, lithium-nickel-cobalt oxides, lithium-nickel-manganese-cobalt oxides, lithium-nickel-cobalt-aluminium oxides, lithium-nickel-manganese oxides, lithium iron phosphates, lithium manganese oxides, or a mixtures thereof.

The anode of the lithium ion battery may comprise any suitable material, commonly used in the secondary lithium ion batteries, capable of reversible intercalating/deintercalating lithium ions. Typical examples thereof are carbonaceous materials including crystalline carbon such as natural or artificial graphite in the form of plate-like, flake, spherical or fibrous type graphite; amorphous carbon, such as soft carbon, hard carbon, mesophase pitch carbide, fired coke and the like, or mixtures thereof. In addition, lithium metal, lithium layer, or conversion materials (e.g. Si or Sn) can be used as anode active materials.

The invention further provides electrode, such as cathode or anode for a lithium ion battery comprising the inventive lithium zirconium phosphate. Specifically, lithium zirconium phosphate of the invention can be a dopant or a coating material for the electrode.

The invention further provides electrolyte for a lithium ion battery comprising the inventive lithium zirconium phosphate.

The electrolyte of the lithium ion battery can be in the liquid, gel or solid form.

The liquid electrolyte of the lithium ion battery may comprise any suitable organic solvent commonly used in the lithium ion batteries, such as anhydrous ethylene carbonate (EC), dimethyl carbonate (DMC), propylene carbonate, methylethyl carbonate, diethyl carbonate, gamma butyrolactone, dimethoxyethane, fluoroethylene carbonate, vinylethylene carbonate, or a mixture thereof.

The gel electrolytes include gelled polymers.

The solid electrolyte of the lithium ion battery may comprise oxides, e.g. lithium metal oxides, sulfides, phosphates, or solid polymers.

The liquid or polymer gel electrolyte of the lithium ion battery usually contains a lithium salt. Examples of such lithium salts include lithium hexafluorophosphate (LiPF₆), lithium bis 2-(trifluoromethylsulfonyl)imide (LiTFSI), lithium bis (fluorosulfonyl) imide (LiFSI), lithium perchlorate (LiClO₄), lithium tetrafluoroborate (LiBF₄), Li₂SiF₆, lithium triflate, LiN(SO₂CF₂CF₃)₂, lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof.

The lithium ion battery, especially the one with liquid or gel electrolyte can also comprise a separator, which prevents the direct contact between the two electrodes, which would lead to the internal short circuit.

The material of the separator may comprise a polyolefin resin, a fluorinated polyolefin resin, a polyester resin, a polyacrylonitrile resin, a cellulose resin, a non-woven fabric or a mixture thereof. Preferably, this material comprises a polyolefin resin such as a polyethylene or polypropylene based polymer, a fluorinated resin such as polyvinylidene fluoride polymer or polytetrafluoroethylene, a polyester resin such as polyethylene terephthalate and polybutylene terephthalate, a polyacrylonitrile resin, a cellulose resin, a non-woven fabric or a mixture thereof.

The lithium ion battery according to the invention may comprise a liquid electrolyte, a gel electrolyte or a solid electrolyte. The liquid mixture of the lithium salt and the organic solvent, which is not cured, polymerized or cross-linked, is referred to as "liquid electrolyte" in the context of the present invention. The gel or solid mixture comprising a cured, polymerized or cross-linked compound or their mixtures, optionally a solvent, and the lithium salt is referred to as a "gel electrolyte". Such gel electrolytes can be prepared by polymerization or cross-linking of a mixture, containing at least one reactive, i.e. polymerizable or cross-linkable, compound and a lithium salt.

A special type of lithium-ion battery is a lithium-polymer battery, wherein a polymer electrolyte is used instead of a liquid electrolyte. The electrolyte of a similar solid-state battery can also comprise other types of solid electrolytes, such as sulfidic, oxidic solid electrolytes, or mixtures thereof.

The battery of the invention can be a lithium metal battery, such as Li-air, lithium sulphur (Li-S), and other types of lithium metal batteries.

A Li-air battery typically contains a porous carbon cathode and an organic, glass-ceramic or polymer-ceramic type electrolyte.

A Li-sulfur (Li-S) battery usually contains an iron disulfide (FeS₂), an iron sulfide (FeS), a copper sulfide (CuS), a lead sulfide and a copper sulfide (PbS + CuS) cathode.

There are also many other known types of lithium metal batteries such as e.g. lithium-selenium (Li-Se), lithium-manganese dioxide (Li-MnO₂ or Li/Al-MnO₂), lithium-monofluoride (Li-(CF)ₓ), lithium-thionyl chloride (Li-SOCl₂), lithium -sulfuryl chloride (Li-SO₂Cl₂), lithium-sulfur dioxide (Li-SO₂), lithium-iodine (Li-I₂), lithium-silver chromate (Li-Ag₂CrO₄), lithium-vanadium pentoxide (Li-V₂O₅ or Li/Al-V₂O₅), lithium-copper chloride (Li-CuCl₂), lithium copper (II) oxide (Li-CuO), lithium-copper oxyphosphate (Li-Cu₄O(PO₄)₂) and other types.

### Brief Description of the Drawings

Figure 1 is a TEM image of lithium zirconium phosphate particles prepared as described in comparative example 1.
Figure 2 is a TEM image of lithium zirconium phosphate particles prepared as described in comparative example 2.
Figure 3 is a TEM image of lithium zirconium phosphate particles prepared as described in example 1.
Figure 4 shows XRD patterns of lithium zirconium phosphates prepared as described in examples 1-2 and comparative examples 1-2.
Figure 5 shows SEM images of NMC dry coated with fumed lithium zirconium phosphate particles (a - backscattered electrons (BSE) image, b - EDX mapping of Zr, c - high resolution SEM image).
Figure 6 shows the rate characteristics and the cycling performance of uncoated NMC and NMC dry coated with fumed lithium zirconium phosphate particles in lithium ion batteries with liquid electrolyte.
Figure 7 shows the charge and discharge curves at the initial cycle with the discharge current of 0.066 mA (0.035C) in sulfide based all-solid-state batteries with the solid electrolyte of Li₆PS₅Cl.
Figure 8 shows the charge and discharge curves at the 4^{th} cycle with the discharge current of 1.4 mA (0.75C) in sulfide based all-solid-state batteries with the solid electrolyte of Li₆PS₅Cl.

### Examples

### Comparative Example 1

6,34 Kilogram of an aqueous solution containing 157.8 g of LiNO₃ (metal content: 4 wt%), 1733 g of Zr(NO₃)₄ (metal content: 6 wt%) was prepared. 1190 Grams of H₃PO₄ (85 wt% in water) were added dropwise to the solution of metal salts under intense stirring resulting in formation of a dispersion containing white precipitate. The composition of the thus obtained compound corresponded to the formula LiZr₂(PO4)₃.

An aerosol of 1.5 kg/h of this dispersion and 15 Nm³/h of air was formed via a two-component nozzle and sprayed into a tubular reaction with a burning flame. The burning gases of the flame consisted of 14.3 Nm³/h of hydrogen and 30 Nm³/h of air. Additionally, 25 Nm³/h of secondary air was used. After the reactor the reaction gases were cooled down and filtered.

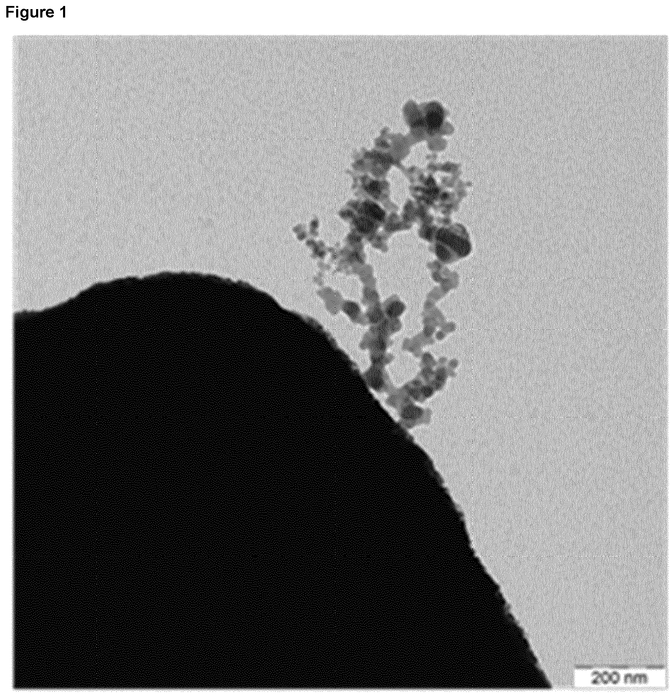

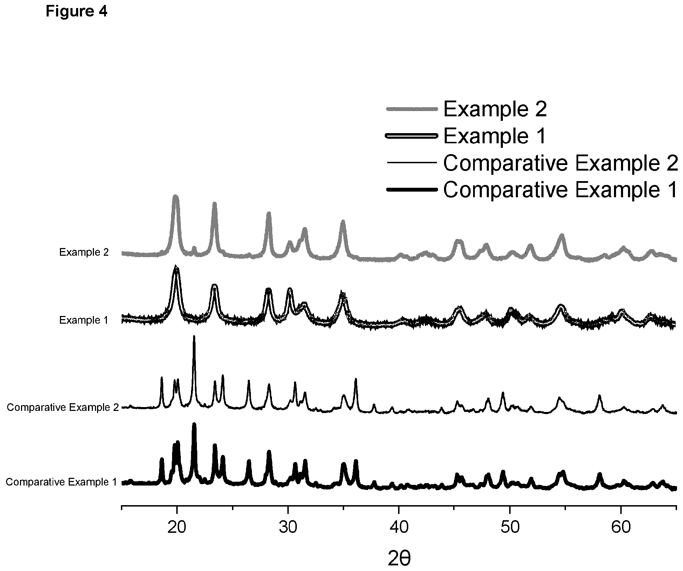

The particle properties are shown in Table 1, the TEM image of the particles is shown in Figure 1 and the XRD analysis (Figure 4) showed, that the major phase of the product was the cubic zirconium phosphate.

### Comparative example 2

6,34 Kilogram of an ethanolic solution containing 157.8 g of LiNO₃ (metal content: 4 wt%), 1733 g of Zr(NO₃)₄ (metal content: 6 wt%) was prepared. 1190 Gram of H₃PO₄ (85 wt% in water) was added dropwise to the solution of metal salts under intense stirring resulting in formation of a dispersion containing white precipitate. The composition of the thus obtained compound corresponded to the formula LiZr₂(PO4)₃.

An aerosol of 1.5 kg/h of this dispersion and 15 Nm³/h of air was formed via a two-component nozzle and sprayed into a tubular reaction with a burning flame. The burning gases of the flame consisted of 8.4 Nm³/h of hydrogen and 30 Nm³/h of air. Additionally, 25 Nm³/h of secondary air was used. After the reactor the reaction gases were cooled down and filtered.

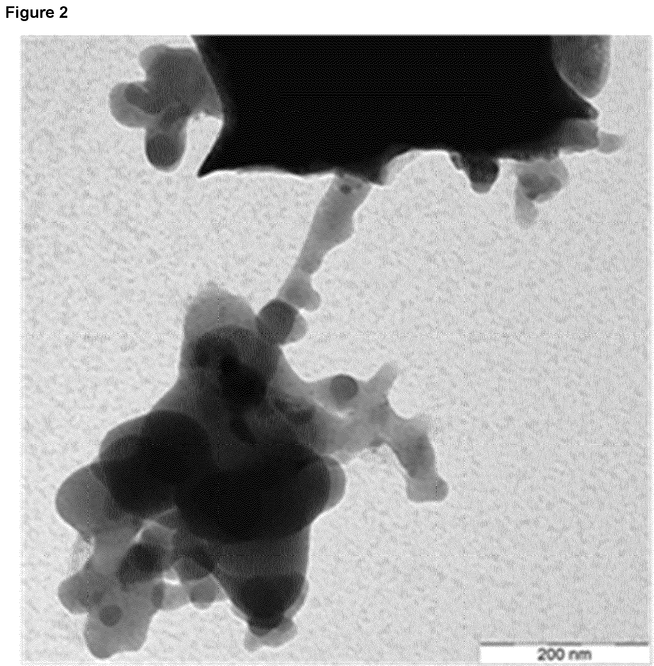

The particle properties are shown in Table 1, the TEM image of the particles is shown in Figure 2 and the XRD analysis (Figure 4) showed, that the major phase of the product was the cubic zirconium phosphate.

### Comparative example 3

61.4 Gram of a solution containing 2.9 g of a commercial solution (Borchers^{®} Deca Lithium2), containing 2 wt% lithium in the form of lithium neodecanoate dissolved in naphtha , 50 g of a commercial solution (Octa Solingen^{®} Zirconium 12), containing 11.86 wt% Zr in the form of zirconium ethyl hexanoate dissolved in white spirit was prepared by mixing. 8.6 Grams of H₃PO₄ (85 wt% in water) were added dropwise to the solution of metal salts under intense stirring. A phase separation was observed, making it impossible to spray the solution homogeneously. No spray experiment was performed

### Example 1

23.75 Kilogram of a solution containing 3370 g of a commercial solution (Borchers^{®} Deca Lithium2), containing 2 wt% lithium in the form of lithium neodecanoate dissolved in naphtha , 15 kg of a commercial solution (Octa Solingen^{®} Zirconium 12), containing 11.86 wt% Zr in the form of zirconium ethyl hexanoate dissolved in white spirit and 5384 g of a commercial solution (Alfa Aesar), containing 16.83 wt % phosphorous in the form of triethyl phosphate were mixed, resulting in a clear solution. This solution corresponding to a composition of LiZr₂(PO₄)₃.

An aerosol of 1.5 kg/h of this dispersion and 15 Nm³/h of air was formed via a two-component nozzle and sprayed into a tubular reaction with a burning flame. The burning gases of the flame consisted of 8.5 Nm³/h of hydrogen and 30 Nm³/h of air. Additionally, 25 Nm³/h of secondary air was used. After the reactor the reaction gases were cooled down and filtered.

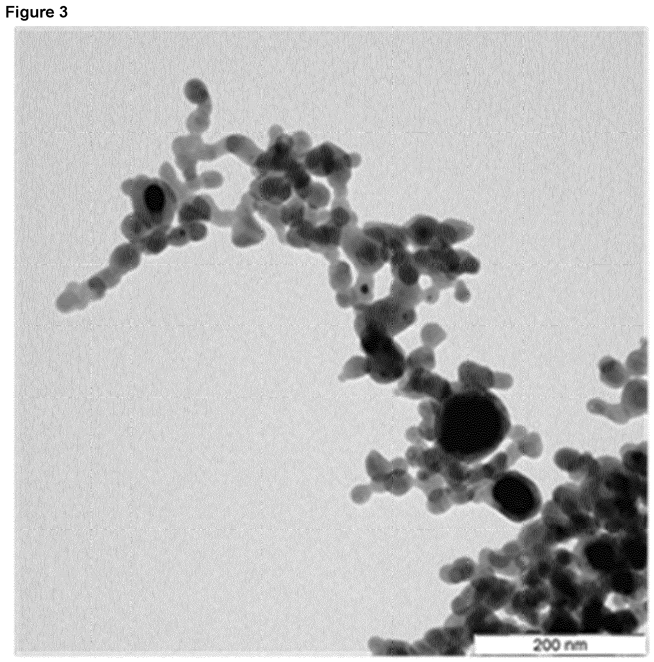

The particle properties are shown in table 1, the TEM image of the particles are shown in Figure 3 and the XRD analysis (Figure 4) showed, that the major phase of the product was the rhombohedral lithium zirconium phosphate.

### Example 2

6,18 Kilogram of a solution containing 1056 g of a commercial solution (Borchers^{®} Deca Lithium2), containing 2 wt% Lithium in the form of lithium neodecanoate dissolved in naphtha, 2453 g of a commercial solution (Octa Solingen^{®} Zirconium 12), containing 18.01 wt% Zr in the form of zirconium ethyl hexanoate dissolved in white spirit and 1408 g of a commercial solution (Alfa Aesar), containing 16.83 wt % phosphorous in the form of triethyl phosphate were mixed, resulting in a clear solution. A further solution, containing 60.8 g of Ca(NO₃)₂ × 4H₂O, 1200 g of ethanol and 1200 g of ethyl hexanoic acid was added under constant stirring until a clear solution was obtained. This solution corresponded to a composition of Li_{1.2}Ca_{0.1}Zr_{1.9}(PO₄)₃.

An aerosol of 1.5 kg/h of this dispersion and 15 Nm³/h of air was formed via a two-component nozzle and sprayed into a tubular reaction with a burning flame. The burning gases of the flame consisted of 8.7 Nm³/h of hydrogen and 30 Nm³/h of air. Additionally, 25 Nm³/h of secondary air was used. After the reactor the reaction gases were cooled down and filtered.

The particle properties are shown in table 1 and the XRD analysis (Figure 4) showed, that the major phase of the product was the rhombohedral lithium zirconium phosphate.

Particle properties of the obtained products summarized in Table 1 show that only using of the inventive combination of metal carboxylates and ethyl phosphate in a solution containing no water lead to lithium zirconium phosphates with a relatively high BET surface area (17-44 m²/g vs. 4.3-4.7 m²/g for comparative examples), small particle size (76-130 nm vs. ca. 4 µm for comparative examples) and low tamped density (ca. 50 g/L vs. ca 300 g/L for comparative examples).

**Table 1 Lithium zirconium phosphate properties**

| Example | BET [m²/g] | d₁₀ [µm] | d₅₀ [µm] | d₉₀ [µm] | tamped density [g/L] |
|---|---|---|---|---|---|
| Comparative Example 1 | 4.3 | 0.98 | 4.00 | 16.0 | 303 |
| Comparative Example 2 | 4.7 | 1.08 | 3.94 | 57.4 | 285 |
| Example 1 | 44 | 0.058 | 0.076 | 1.60 | 52 |
| Example 2 | 17 | 0.067 | 0.130 | 3.94 | 50 |

### Analysis of lithium zirconium phosphate (LZP) coated mixed lithium transition metal oxides by SEM-EDX

The NMC powder was mixed with the respective amount (1.0 wt%) of the fumed LZP powder from Example 1 in a high intensity laboratory mixer (SOMAKON mixer MP-GL with 0.5 L mixing unit) at first for 1 min at 500 rpm to homogeneously mix the two powders. Afterwards the mixing intensity was increased to 2000 rpm for 5 min to achieve the dry coating of the NMC particles by LZP powder.

LZP coating layer thickness on NMC particles was about 15-200 nm.

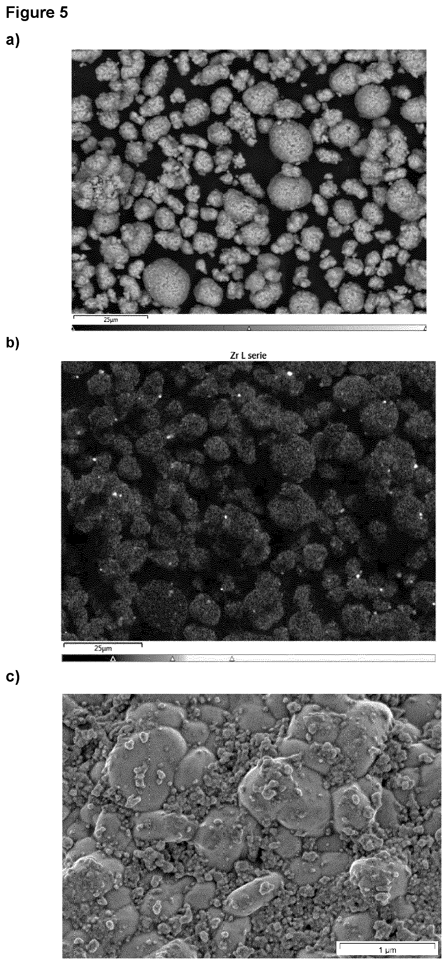

Figure 5 shows SEM-images of NMC dry coated with LZP (Figure 5 a,b,c: fumed LZP of the example 1). Comparison of the back-scatter electron image (a) and the EDX-mapping of Zr (b) of NMC dry coated with fumed LZP reveals a complete and homogeneous coverage of all cathode particles with fumed LZP. No larger LZP agglomerates were detected, showing that a good dispersion of nanostructured fumed LZP particles was achieved. Additionally, no free unattached LZP particles next to the cathode particles were found, indicating the strong adhesion between the coating and the substrate. The high-resolution SEM image (c) shows a homogeneous distribution of fumed LZP with a high degree of surface coverage of the CAM.

### Electrochemical tests of lithium ion batteries with liquid electrolytes

Electrodes for electrochemical measurements were prepared by blending 90 wt% NMC with 5 wt% PVDF (Solef PVDF 5130) as a binder and 5 wt% SUPER PLi (TIMCAL) as a conductive additive under inert gas atmosphere. N-Methyl-2-pyrrolidone (NMP) was used as a solvent. The slurry was casted on aluminum foil and dried for 20 min at 120 °C on a heating plate in air. Afterwards, the electrode sheet was dried in a vacuum furnace at 120 °C for 2 h. Circular electrodes with a diameter of 12 mm were punched out, calendered with a pressure of 90 psi, and dried again in a vacuum furnace at 120 °C for 12 h to remove any residual water and NMP. For the cycling tests the cells were assembled as CR2032 type coin cells (MTI Corporation) in an argon-filled glovebox (GLOVEBOX SYSTEMTECHNIK GmbH). Lithium metal (ROCKWOOD LITHIUM GmbH) is used as the anode material. Celgard 2500 was used as the separator. 25 µL of a 1M solution of LiPF₆ in ethylene carbonate and ethyl methyl carbonate (50:50 wt/wt; SIGMA-ALDRICH) was used as electrolyte. The cells were locked with a crimper (MTI).

For electrochemical evaluations galvanostatic cycling was performed between 3.0 and 4.3 V. For the calculation of the capacities and the specific currents, only the mass of the active material was considered. For the coin half-cells during cycling, the C-rate was increased every four cycles, starting from 0.1/0.1 (Charge/Discharge) to 0.3/0.3, 0.5/0.5, 1.0/1.0, 1.0/2.0 and 1.0/4.0 C. Afterward, the cells were cycled at 0.5/0.5 C for long term stability test.

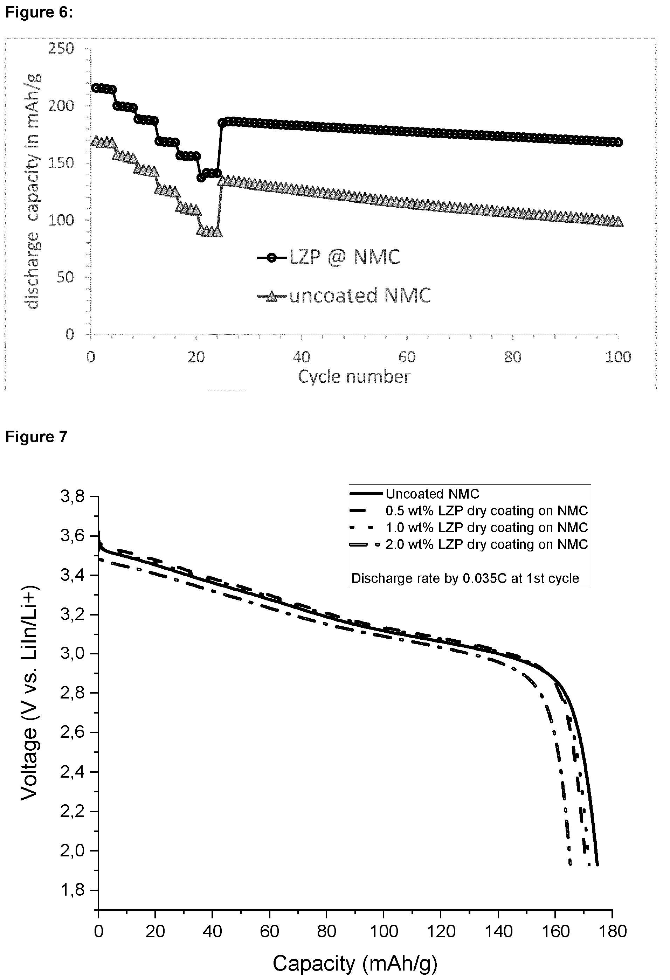

Figure 6 shows the influence of LZP coating layers on the cycling performance. The performance of NMC dry coated with fumed LZP of the example 1 is compared with that of the uncoated NMC as a reference. It can be readily recognized from the shown graphs that the dry coated fumed LZP coating improves the stability and cycle life of NMC significantly. The NMC dry coated with fumed LZP shows a higher discharge capacity over all cycles, the rate test at the beginning and the long-term cycling test. It also shows higher initial specific discharge capacities than the uncoated NMC at 0.1 C.

### Electrochemical tests of lithium ion batteries with sulfide based all-solid-state batteries

A powdered composite electrode is prepared by mixing the active material NCM (AM), conductive carbon additive carbon nanofibers (CNF), and solid electrolyte (Li₆PS₅Cl, SE) in the mass ratio of 63:2:35 for 30 min in an agate mortar. To fabricate a free-standing and flexible dry film, the above prepared powder electrode was mixed with 0.3 wt% of polytetrafluoroethylene (PTFE, emulsion polymerized fine powder; particle size 300-700 µm; softening point 320-330 °C; molecular weight 10⁷-10⁸ g/mol) in a mortar at 100 °C.

After 1 min of mixing and shearing, a single flake was formed. The flake was placed on a hot plate and rolled out to the desired thickness (≈100 µm). Each sample was prepared at least twice to confirm the reproducibility of the process. To prepare a free-standing electrolyte film, the solid electrolyte was mixed with 0.15 wt% of PTFE and treated in the same way as the cathode film.

A test cell was prepared for measuring the basic characteristics of the cathode composite such as the charge/discharge potential profiles, rated discharge capability.

The cell was prepared by using a die with a diameter of 13 mm. The test cell comprises of the stainless-steel outer casing with the Teflon insulator. For a typical cell, the electrolyte Li₆PS₅Cl powder was uniformly spread inside the die by a micro-spatula. Next, the powder was once temporally compressed and compacted into a pellet. The cathode composite powder was homogeneously distributed across the compacted electrolyte surface in the die. Then the cathode layer was compressed. On the opposite side of the cell stack, a Lithium-Indium alloy anode was placed and compressed. All the cell components were again compressed together and completely pelletized by using a hydraulic press (4 tons for 30 s were applied): 300 MPa.

After compression, the cell stack was placed inside the outer steel casing, were a screw maintains the electric contact in the cell. The screw was fastened at 3.0 Nm using a preset torque.

All above mentioned processes were carried out in an Ar filled glove box (<0.1 ppm H₂O and O₂).

The cycle and rate performances of the cell were measured by a battery tester CTS-Lab (BaSyTec, Germany). The standard rate performance test plan consists of 3 different discharge currents ranging from 0.066 mA (0.035C) to 1.4 mA (0.75C) while the charging rate is kept constant at 0.14 mA (0.075C) including a CV step. The standard cut-off voltages for the cycle test were set at 3.63 V and 1.93 V for charge and discharge, respectively.

Figure 7 shows the influence of LZP coating layers on the rate characteristics at the discharge current of 0.066 mA (0.035C) at the 1^{st} cycle with different coating amount of 0.5, 1 and 2 wt% LZP. The discharge capacities of NMC dry coated with fumed LZP of the example 1 at 0.066mA are compared with that of the uncoated NMC as a reference. It can be readily recognized from the shown graphs that no significant improvement was observed at the initial discharge capacity at low discharge rate like 0.035C in sulfide based all-solid-state batteries.

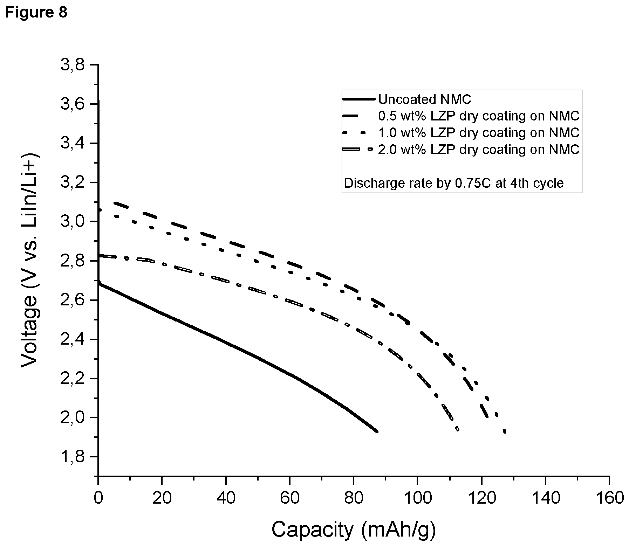

Figure 8 shows the influence of LZP coating layers on the rate characteristics at the discharge current of 1.4 mA (0.75C) at the 4^{th} cycle with different coating amount of 0.5, 1 and 2 wt% LZP. The discharge capacities of NMC dry coated with fumed LZP of the example 1 at 0.75C are compared with that of the uncoated NMC as a reference. It can be readily recognized from the shown graphs that the dry coated fumed LZP coating improves the discharge rate characteristics of NMC significantly. The NMC dry coated with fumed LZP shows a higher discharge capacity at high discharge rate like 0.75C in sulfide based all-solid-state batteries.

## Claims

1. Lithium zirconium phosphate of a general formula LiₐZr_{b}M_{c}(PO₄)_{d},
wherein M is at least one metal different from Li and Zr,
0.5 ≤ a ≤ 5.0, 0.5 ≤ b ≤ 5.0, 0 ≤ c ≤ 5, 1 ≤ d ≤ 5
**characterized in that** the lithium zirconium phosphate
is in the form of aggregated primary particles,
has a BET surface area of 5 m²/g -100 m²/g,
a numerical mean particle diameter of d₅₀ = 0.03 µm -2 µm, as determined by static light scattering (SLS), and
a tamped density of 20 g/L - 200 g/L.

2. Process for producing lithium zirconium phosphate according to claim 1,
by means of flame spray pyrolysis,
**characterized in that**
at least one solution of metal precursors, comprising
- a lithium carboxylate and a zirconium carboxylate, wherein each of these metal carboxylates contains 5 to 20 carbon atoms,
- an organic phosphate,
- a solvent containing less than 10% by weight water
is subjected to flame spay pyrolysis.

3. Process according to claim 2,
**characterized in that**
the spray flame pyrolysis comprises the following steps:
a) the solution of metal precursors is atomized to afford an aerosol by means of an atomizer gas,
b) the aerosol is brought to reaction in the reaction space of the reactor with a flame obtained by ignition of a mixture of fuel gas and an oxygen-containing gas to obtain a reaction stream,
c) the reaction stream is cooled and
d) the solid lithium zirconium phosphate is subsequently removed from the reaction stream.

4. Process according to claims 2 or 3,
**characterized in that**
the lithium and zirconium carboxylates are, independently of each other, carboxylates selected from the group consisting of linear, branched or cyclic pentanoate (C5), hexanoate (C6), heptanoate (C7), octanoate (C8), nonanoate (C9), decanoate (D10), undecanoate (C11), dodecanoate (C12), tridecanoate (C13), tetradecanoate (C14), pentadecanoate (C15), hexadecanoate (C16), heptadecanoate (C17), octadecanoate (C18), nonadecanoate (C19), icosanoate (C20) of lithium and/or zirconium, and the mixtures thereof.

5. Process according to claims 2 to 4,
**characterized in that**
the organic phosphate is selected from esters of phosphonic acid (H₃PO₃), orthophosphoric acid (H₃PO₄), metaphosphoric acid (HPO₃), pyrophosphoric acid (H₄P₂O₇), polyphosphoric acids, and mixtures thereof.

6. Process according to claims 2 to 5,
**characterized in that**
the organic phosphate is selected from alkyl ester, aryl ester, mixed alkyl/aryl esters, and mixtures thereof.

7. Process according to claims 2 to 6,
**characterized in that**
the organic phosphate is an alkyl ester having alkyl groups with 1 to 10 carbon atoms.

8. Process according to claims 2 to 7,
**characterized in that**
the solvent is selected from the group consisting of linear or cyclic, saturated or unsaturated, aliphatic or aromatic hydrocarbons, esters of carboxylic acids, ethers, alcohols, carboxylic acids, and the mixtures thereof.

9. Process according to claims 2 to 8,
**characterized in that**
the solution of metal precursors comprises a chelating agent selected from the group consisting of diamines and 1,3-dicarbonyl compounds.

10. Process according to claims 2 to 9,
further comprising thermal treatment of the lithium zirconium phosphate, produced by means of flame spray pyrolysis, at a temperature of 600 °C - 1300 °C.

11. Process according to claim 10,
further comprising milling of the thermally treated lithium zirconium phosphate.

12. Use of the lithium zirconium phosphate according to claim 1 as a component of a solid-state electrolyte, as an additive in liquid, or gel electrolyte or as a constituent of an electrode of a lithium ion battery.

13. Electrode for a lithium ion battery comprising lithium zirconium phosphate according to claim 1.

14. Electrolyte for a lithium ion battery comprising lithium zirconium phosphate according to claim 1.

15. Lithium ion battery comprising lithium zirconium phosphate according to claim 1.

16. Lithium ion battery according to claim 15, comprising a liquid or gel electrolyte.

17. Lithium ion battery according to claim 15, wherein the battery is a solid-state battery.

## Patentansprüche

1. Lithiumzirconiumphosphat der allgemeinen Formel LiₐZr_{b}M_{c}(PO₄)_{d},
wobei M für mindestens ein Metall steht, das von Li und Zr verschieden ist,
0,5 ≤ a ≤ 5,0, 0,5 ≤ b ≤ 5,0, 0 ≤ c ≤ 5, 1 ≤ d ≤ 5,
**dadurch gekennzeichnet, dass** das Lithiumzirconiumphosphat
in Form von aggregierten Primärteilchen vorliegt,
eine BET-Oberfläche von 5 m²/g - 100 m²/g,
einen zahlenmittleren Teilchendurchmesser d₅₀ = 0,03 µm - 2 µm gemäß Bestimmung durch statische Lichtstreuung (SLS) und
eine Stampfdichte von 20 g/l bis 200 g/l aufweist.

2. Verfahren zur Herstellung von Lithiumzirconiumphosphat nach Anspruch 1 mittels Flammensprühpyrolyse,
**dadurch gekennzeichnet, dass**
mindestens eine Lösung von Metallvorläufern, umfassend
- ein Lithiumcarboxylat und ein Zirconiumcarboxylat, wobei jedes dieser Metallcarboxylate 5 bis 20 Kohlenstoffatome enthält,
- ein organisches Phosphat,
- ein Lösungsmittel, das weniger als 10 Gew.-% Wasser enthält,
einer Flammensprühpyrolyse unterworfen wird.

3. Verfahren nach Anspruch 2,
**dadurch gekennzeichnet, dass**
die Flammensprühpyrolyse die folgenden Schritte umfasst:
a) die Lösung von Metallvorläufern unter Erhalt eines Aerosols mittels eines Zerstäubergases zerstäubt wird,
b) das Aerosol wird im Reaktionsraum des Reaktors mit einer durch Zündung einer Mischung von Brenngas und einem sauerstoffhaltigen Gas erhaltenen Flamme zur Reaktion gebracht, was einen Reaktionsstrom ergibt,
c) der Reaktionsstrom wird abgekühlt, und
d) anschließend wird das feste Lithiumzirconiumphosphat aus dem Reaktionsstrom entfernt.

4. Verfahren nach Anspruch 2 oder 3,
**dadurch gekennzeichnet, dass**
es sich bei den Lithium- und Zirconiumcarboxylaten unabhängig voneinander um Carboxylate handelt, die aus der Gruppe bestehend aus linearem, verzweigtem oder cyclischem Pentanoat (C5), Hexanoat (C6), Heptanoat (C7), Octanoat (C8), Nonanoat (C9), Decanoat (D10), Undecanoat (C11), Dodecanoat (C12), Tridecanoat (C13), Tetradecanoat (C14), Pentadecanoat (C15), Hexadecanoat (C16), Heptadecanoat (C17), Octadecanoat (C18), Nonadecanoat (C19), Icosanoat (C20) von Lithium und/oder Zirconium und den Mischungen davon ausgewählt sind.

5. Verfahren nach den Ansprüchen 2 bis 4,
**dadurch gekennzeichnet, dass**
das organische Phosphat aus Estern von Phosphonsäure (H₃PO₃), Orthophosphorsäure (H₃PO₄), Metaphosphorsäure (HPO₃), Pyrophosphorsäure (H₄P₂O₇), Polyphosphorsäuren und Mischungen davon ausgewählt ist.

6. Verfahren nach den Ansprüchen 2 bis 5,
**dadurch gekennzeichnet, dass**
das organische Phosphat aus Alkylester, Arylester, gemischten Alkyl/Aryl-Estern und Mischungen davon ausgewählt ist.

7. Verfahren nach den Ansprüchen 2 bis 6,
**dadurch gekennzeichnet, dass**
es sich bei dem organischen Phosphat um einen Alkylester mit Alkylgruppen mit 1 bis 10 Kohlenstoffatomen handelt.

8. Verfahren nach den Ansprüchen 2 bis 7,
**dadurch gekennzeichnet, dass**
das Lösungsmittel aus der Gruppe bestehend aus linearen oder cyclischen, gesättigten oder ungesättigten, aliphatischen oder aromatischen Kohlenwasserstoffen, Estern von Carbonsäuren, Ethern, Alkoholen, Carbonsäuren und den Mischungen davon ausgewählt ist.

9. Verfahren nach den Ansprüchen 2 bis 8,
**dadurch gekennzeichnet, dass**
die Lösung von Metallvorläufern einen Chelatbildner enthält, der aus der Gruppe bestehend aus Diaminen und 1,3-Dicarbonylverbindungen ausgewählt ist.

10. Verfahren nach den Ansprüchen 2 bis 9,
ferner umfassend eine thermische Behandlung des mittels Flammensprühpyrolyse hergestellten Lithiumzirconiumphosphats bei einer Temperatur von 600 °C - 1300 °C.

11. Verfahren nach Anspruch 10,
ferner umfassend das Mahlen des thermisch behandelten Lithiumzirconiumphosphats.

12. Verwendung des Lithiumzirconiumphosphats nach Anspruch 1 als Komponente eines Festkörperelektrolyten, als Additiv in Flüssig- oder Gelelektrolyt oder als Bestandteil einer Elektrode einer Lithium-Ionen-Batterie.

13. Elektrode für eine Lithium-Ionen-Batterie, umfassend Lithiumzirconiumphosphat nach Anspruch 1.

14. Elektrolyt für eine Lithium-Ionen-Batterie, umfassend Lithiumzirconiumphosphat nach Anspruch 1.

15. Lithium-Ionen-Batterie, umfassend Lithiumzirconiumphosphat nach Anspruch 1.

16. Lithium-Ionen-Batterie nach Anspruch 15, umfassend einen Flüssig- oder Gelelektrolyt.

17. Lithium-Ionen-Batterie nach Anspruch 15, wobei es sich bei der Batterie um eine Festkörperbatterie handelt.

## Revendications

1. Phosphate de lithium et de zirconium de formule générale LiₐZr_{b}M_{c}(PO₄)_{d},
dans lequel M est au moins un métal différent de Li et Zr,
0,5 ≤ a ≤ 5,0, 0,5 ≤ b ≤ 5,0, 0 ≤ c ≤ 5, 1 ≤ d ≤ 5
**caractérisé en ce que** le phosphate de lithium et de zirconium
est sous la forme de particules primaires agrégées et
a une surface spécifique BET de 5 m²/g à 100 m²/g,
un diamètre moyen des particules en nombre, tel que déterminé par diffusion statique de la lumière (SLS), d₅₀ = 0,03 µm à 2 µm et
une densité après tassage de 20 g/l à 200 g/l.

2. Procédé de production de phosphate de lithium et de zirconium selon la revendication 1,
au moyen d'une pyrolyse par pulvérisation en flamme,
**caractérisé en ce que**
au moins une solution de précurseurs métalliques, comprenant
- un carboxylate de lithium et un carboxylate de zirconium, chacun de ces carboxylates métalliques contenant 5 à 20 atomes de carbone,
- un phosphate organique,
- un solvant contenant moins de 10 % en poids d'eau est soumise à une pyrolyse par pulvérisation en flamme.

3. Procédé selon la revendication 2,
**caractérisé en ce que**
la pyrolyse par pulvérisation en flamme comprend les étapes suivantes :
a) la solution de précurseurs métalliques est atomisée pour fournir un aérosol au moyen d'un gaz d'atomisation,
b) l'aérosol est amené à réagir dans l'espace de réaction du réacteur avec une flamme obtenue par inflammation d'un mélange de combustible gazeux et d'un gaz contenant de l'oxygène pour obtenir un flux de réaction,
c) le flux de réaction est refroidi et
d) le phosphate de lithium et de zirconium solide est par la suite retiré du flux de réaction.

4. Procédé selon les revendications 2 ou 3,
**caractérisé en ce que**
les carboxylates de lithium et de zirconium sont, indépendamment l'un de l'autre, des carboxylates choisis dans le groupe constitué par les pentanoate (C5), hexanoate (C6), heptanoate (C7), octanoate (C8), nonanoate (C9), décanoate (D10), undécanoate (C11), dodécanoate (C12), tridécanoate (C13), tétradécanoate (C14), pentadécanoate (C15), hexadécanoate (C16), heptadécanoate (C17), octadécanoate (C18), nonadécanoate (C19), icosanoate (C20) linéaires, ramifiés ou cycliques de lithium et/ou de zirconium et les mélanges de ceux-ci.

5. Procédé selon les revendications 2 à 4,
**caractérisé en ce que**
le phosphate organique est choisi parmi les esters de l'acide phosphonique (H₃PO₃), de l'acide orthophosphorique (H₃PO₄), de l'acide métaphosphorique (HPO₃), de l'acide pyrophosphorique (H₄P₂O₇), des acides polyphosphoriques et des mélanges de ceux-ci.

6. Procédé selon les revendications 2 à 5,
**caractérisé en ce que**
le phosphate organique est choisi parmi un ester alkylique, un ester arylique, les esters alkyliques/aryliques mixtes et les mélanges de ceux-ci.

7. Procédé selon les revendications 2 à 6,
**caractérisé en ce que**
le phosphate organique est un ester alkylique ayant des groupes alkyle renfermant 1 à 10 atomes de carbone.

8. Procédé selon les revendications 2 à 7,
**caractérisé en ce que**
le solvant est choisi dans le groupe constitué par les hydrocarbures linéaires ou cycliques, saturés ou insaturés, aliphatiques ou aromatiques, les esters d'acides carboxyliques, les éthers, les alcools, les acides carboxyliques et les mélanges de ceux-ci.

9. Procédé selon les revendications 2 à 8,
**caractérisé en ce que**
la solution de précurseurs métalliques comprend un agent chélatant choisi dans le groupe constitué par les diamines et les composés 1,3-dicarbonylés.

10. Procédé selon les revendications 2 à 9,
comprenant en outre le traitement thermique du phosphate de lithium et de zirconium, produit au moyen d'une pyrolyse par pulvérisation en flamme, à une température de 600 °C à 1300 °C.

11. Procédé selon la revendication 10,
comprenant en outre le broyage du phosphate de lithium et de zirconium traité thermiquement.

12. Utilisation du phosphate de lithium et de zirconium selon la revendication 1 en tant que composant d'un électrolyte tout-solide, en tant qu'additif dans un électrolyte liquide ou sous forme de gel ou en tant que constituant d'une électrode d'une batterie lithium-ion.

13. Électrode pour batterie lithium-ion comprenant le phosphate de lithium et de zirconium selon la revendication 1.

14. Électrolyte pour batterie lithium-ion comprenant le phosphate de lithium et de zirconium selon la revendication 1.

15. Batterie lithium-ion comprenant le phosphate de lithium et de zirconium selon la revendication 1.

16. Batterie lithium-ion selon la revendication 15, comprenant un électrolyte liquide ou sous forme de gel.

17. Batterie lithium-ion selon la revendication 15, la batterie étant une batterie tout-solide.
